# EUROPEAN PATENT APPLICATION

(11) **EP 3 489 210 A2**
(43) Date of publication of application: **29.05.2019**
(21) Application number: 18208051.5
(22) Date of filing: 23.11.2018
(51) Int. Cl.: C04B 41/89, F01D 5/28

(54) **PRETREATMENT OF HIGH TEMPERATURE CERAMIC COMPOSITES**

(30) Priority: 27.11.2017 US 201715822756
(71) Applicant: General Electric Company, Schenectady, NY 12345 (US)
(72) Inventor: Luthra, Krishan L, Niskayuna, NY New York 12309 (US)
(74) Representative: Openshaw & Co.

(57) **Abstract**

Coated components, along with methods of their formation, are provided. The coated component includes a ceramic substrate having a Si-treated layer surrounding a ceramic core and an environmental barrier coating on the Si-treated layer of the ceramic substrate. The ceramic core includes silicon carbide, and the Si-treated layer is pretreated to tailor its surface's properties for inhibiting or delaying the formation of carbon oxides to upon exposure of the Si-treated layer to oxygen.

## Description

### FIELD

The present invention generally relates to the use of environmental barrier coatings on ceramic components, along with methods of their formation and use.

### BACKGROUND

Higher operating temperatures for gas turbine engines are continuously being sought in order to improve their efficiency. However, as operating temperatures increase, the high temperature durability of the components of the engine must correspondingly increase. Significant advances in high temperature capabilities have been achieved through the formulation of iron, nickel, and cobalt-based superalloys. Still, with many hot gas path components constructed from super alloys, thermal barrier coatings (TBCs) can be utilized to insulate the components and can sustain an appreciable temperature difference between the load-bearing alloys and the coating surface, thus limiting the thermal exposure of the structural component.

While superalloys have found wide use for components used throughout gas turbine engines, and especially in the higher temperature sections, alternative lighter-weight substrate materials have been proposed, such as ceramic matrix composite (CMC) materials. CMC and monolithic ceramic components can be coated with environmental barrier coatings (EBCs) to protect them from the harsh environment of high temperature engine sections. EBCs can provide protection against the corrosive gases in the hot combustion environment.

Silicon carbide and silicon nitride ceramics undergo oxidation in dry, high temperature environments. This oxidation produces a passive, silicon oxide scale on the surface of the material. In moist, high temperature environments containing water vapor, such as a turbine engine, both oxidation and recession occurs due to the formation of a passive silicon oxide scale and subsequent conversion of the silicon oxide to gaseous silicon hydroxide. To prevent recession in moist, high temperature environments, environmental barrier coatings (EBC's) are deposited onto silicon carbide and silicon nitride materials, including silicon carbide fiber reinforced silicon carbide matrix (SiC/SiC) composites.

Currently, EBC materials are made out of rare earth silicate compounds. These materials seal out water vapor, preventing it from reaching the silicon oxide scale on the silicon carbide or silicon nitride surface, thereby preventing recession. Such materials cannot prevent oxygen penetration, however, which results in oxidation of the underlying substrate. Oxidation of the substrate yields a passive silicon oxide scale, along with the release of carbonaceous or nitrous oxide gas. The carbonaceous (i.e., CO, CO₂) or nitrous (i.e., NO, NO₂, etc.) oxide gases cannot escape out through the dense EBC and thus, blisters form. The use of a silicon bond coating has been the solution to this blistering problem to date. The silicon bond coating provides a layer that oxidizes (forming a passive silicon oxide layer beneath the EBC) without liberating a gaseous by-product.

However, the presence of a silicon bond coating limits the upper temperature of operation for the EBC because the melting point of silicon metal is relatively low. In use, the silicon bond coating melts at coating temperatures of about 1414 °C, which is the melting point of silicon metal. Above these melting temperatures, the silicon bond coating may delaminate from the underlying substrate, effectively removing the bond coat and the EBC thereon. As such, it is desirable to obviate the need for a silicon bond coating in the EBC to achieve a higher operational temperature limit for the EBC.

### BRIEF DESCRIPTION

Aspects and advantages of the invention will be set forth in part in the following description, or maybe obvious from the description, or maybe learned through practice of the invention.

Coated components are generally provided that may include, in one embodiment, a ceramic substrate having a Si-treated layer surrounding a ceramic core and an environmental barrier coating on the Si-treated layer of the ceramic substrate. The ceramic core may include silicon carbide, and the Si-treated layer may be pretreated to tailor its surface's properties for inhibiting or delaying the formation of carbon oxides to upon exposure of the Si-treated layer to oxygen.

In one embodiment, the Si-treated layer is pretreated such that the environmental barrier coating is coated directly thereon without a silicon bond coating therebetween. For example, the environmental barrier coating may be directly on the Si-treated layer of the ceramic substrate

In particular embodiments, the ceramic core includes silicon carbide having a first ratio of silicon to carbon, with the Si-treated layer including silicon carbide having a second ratio of silicon to carbon, where the second ratio has a greater amount of silicon relative to the first ratio.

In one particular embodiment, the Si-treated layer is integral to the ceramic core and has a depth of about 750 µm or less (e.g., a depth of 25 µm to about 260 µm) from an outer surface of the Si-treated layer extending into the ceramic substrate toward the ceramic core.

In one embodiment, the Si-treated layer may be an applied layer on the ceramic core, such as having a thickness of about 1 µm to about 250 µm. In such an embodiment, a barrier layer may be between the ceramic core and the Si-treated layer, such as a barrier layer that includes a rare earth disilicate.

In one embodiment, a coated component may include a ceramic substrate having a Si-treated layer surrounding a ceramic core, where the ceramic core comprises silicon carbide having a first ratio of silicon to carbon, and where the Si-treated layer comprises silicon carbide having a second ratio of silicon to carbon, with the second ratio having a greater amount of silicon relative to the first ratio. The coated component may also include an environmental barrier coating on the Si-treated layer of the ceramic substrate.

Methods are also generally provided for coating a ceramic component on its outer surface, where the ceramic component comprises silicon carbide. In one embodiment, the method includes exposing the outer surface of the ceramic component to silicon vapor at a temperature of about 1400 °C to about 1800 °C to form a Si-treated layer.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended Figs., in which:
FIG. 1 is a cross-sectional side view of an exemplary coated component having a ceramic substrate formed from a silicon-treated layer integral to a ceramic core;
FIG. 2 is a cross-sectional side view of a ceramic substrate exposed to silicon vapor to form a Si-treated layer that is integral to the ceramic core;
FIG. 3 is a cross-sectional side view of the ceramic substrate of FIG. 2 after silicon vapor treatment;
FIG. 4 is a schematic cross-sectional view of an exemplary coated component having a ceramic substrate formed from a silicon-treated layer applied onto a ceramic core; and
FIG. 5 is a cross-sectional side view of a ceramic substrate exposed to silicon vapor to form a Si-treated layer that applied onto the ceramic core.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" maybe used interchangeably to distinguish one component from another and are not intended to signify location or importance of the individual components.

In the present disclosure, when a layer is being described as "on" or "over" another layer or substrate, it is to be understood that the layers can either be directly contacting each other or have another layer or feature between the layers, unless expressly stated to the contrary. Thus, these terms are simply describing the relative position of the layers to each other and do not necessarily mean "on top of' since the relative position above or below depends upon the orientation of the device to the viewer.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth. As used herein, "rare earth elements" encompass the elements scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), or mixtures thereof.

A coated component is generally provided that includes a ceramic substrate pretreated to tailor its surface's properties such that an environmental barrier coating (EBC) may be coated directly thereon without a silicon bond coating therebetween. For example, the material underlying the EBC may be pretreated to keep the carbon activity below that required to form carbon oxides (e.g., CO and/or CO₂) gas bubbles upon exposure to oxygen at operational temperatures. Pretreatment is designed to delay the formation of carbon oxides gases during use, thus extending life.

In one embodiment, the ceramic substrate may have a silicon-treated (Si-treated) layer surrounding a ceramic core, with the Si-treated layer being pretreated to tailor its surface's properties for inhibiting the formation of carbon oxides to upon exposure of the Si-treated layer to oxygen. For example, both the ceramic core and the Si-treated layer may include silicon carbide, and may have the same or similar stoichiometric ratios of Si to C prior to treatment. Then, the ceramic substrate may be treated to increase the relative amount of Si in the Si-treated layer such that the Si-treated layer may have an increased stoichiometric ratio of Si to C after treatment. As such, the Si-treated layer may have a greater amount of Si when compared to the stoichiometric ratio of Si to C in the ceramic core. Due to the increased amount of Si in the outer layer (compared to the amount of Si in the ceramic core), the amount of carbon within the outer layer may be decreased to a level that inhibits the formation of carbon oxides upon exposure to oxygen at elevated temperatures for longer periods of time, thus extending life..

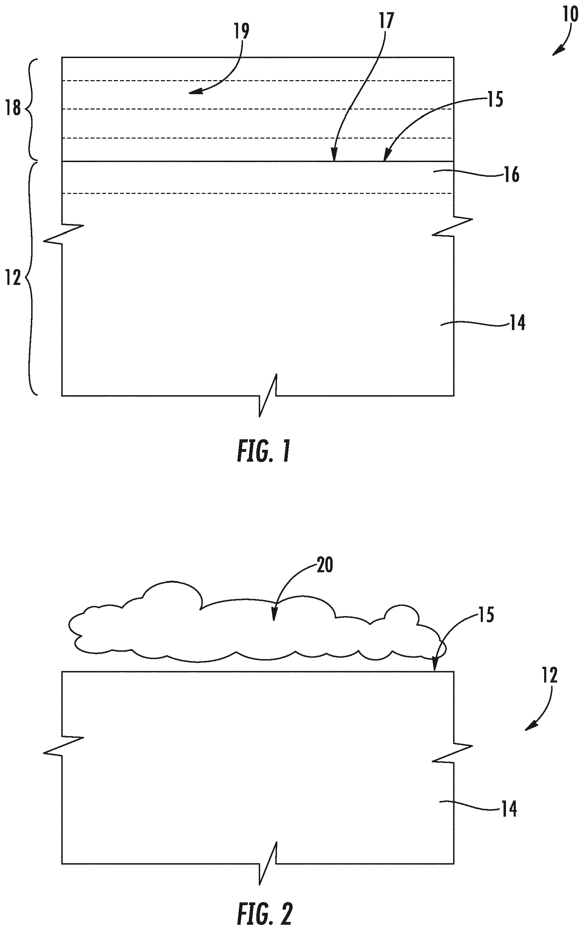

FIGS. 1-4 show various embodiments of exemplary coated components 10. In each embodiment, the coated component 10 includes a ceramic substrate 12 having a ceramic core 14 having a Si-treated layer 16. An environmental barrier coating 18 is on the Si-treated layer 16. Generally, the ceramic core 14 may be formed from a ceramic matrix composite ("CMC") material, such as a silicon-based, non-oxide ceramic matrix composite. As used herein, "CMC" refers to a silicon-containing, matrix and reinforcing material. As used herein, "monolithic ceramics" refers to materials without fiber reinforcement (e.g., having the matrix material only). Herein, CMCs and monolithic ceramics are collectively referred to as "ceramics." In one particular embodiment, the CMC includes a material having a matrix and/or reinforcing fibers comprising silicon carbide. Examples include, but are not limited to, CMCs with silicon carbide matrix and silicon carbide fiber; silicon nitride matrix and silicon carbide fiber; silicon carbide/silicon nitride matrix mixture and silicon carbide fiber; and silicon/silicon carbide matrix mixture and silicon carbide fiber.

As stated, the ceramic core 14 includes a silicon carbide having a first ratio of silicon to carbon. For example, the first ratio of silicon to carbon may be in the range of about 0.97 to about 1.03, which may vary slightly throughout the ceramic core 14.

Referring to FIG. 1, the Si-treated layer 16 is defined within the ceramic substrate 12 so as to be integral ceramic core 14. Such an integral Si-treated layer 16 may be formed by exposing the ceramic substrate 12 to silicon vapor 20, such as shown in FIG. 2. For example, the surface 15 of the ceramic core 14 may be exposed to silicon vapor 20 at a temperature sufficient for forming the Si-treated layer 16 with an increased amount of Si compared to the ceramic core 14, which may be performed in an oven or suitable other chamber.

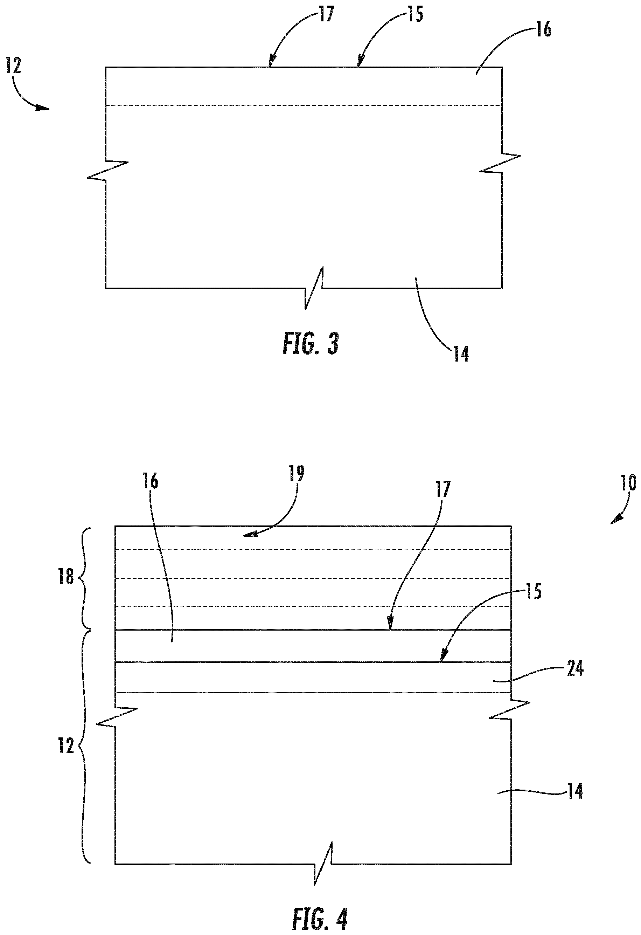

Depending on the exposure conditions (e.g., time, temperature, pressure, and duration), the temperature and/or other conditions of the silicon vapor may be varied to control the Si to C ratio in the resulting Si-treated layer 16, as well as the depth of penetration of the enriched Si portion. Generally, the silicon vapor needs to have a temperature high enough such that it is a vapor at the exposure conditions. For instance, the silicon vapor and the substrate 12 may have a temperature of about 1400 °C to about 1800 °C, preferably about 1600 °C to about 1750 °C (e.g., about 1600 °C to about 1700 °C). The silicon vapor may be generated in a wide variety of ways. One simple way to generate silicon vapor would be to heat silicon at a temperature below that of the surface of the substrate being heated in an argon environment and passing the argon containing silicon vapor over the substrate 12. FIG. 3 shows that the ceramic component 12 includes the Si-treated layer 16 on the ceramic core 14 such that the ceramic component 12 defines the outer surface 17, which is also the outer surface 15 of the core 14 prior to Si treatment.

In certain embodiments, the Si-treated layer 16 formed integral to the ceramic core 14 may have a depth of about 750 µm or less, preferably about 25 µm to about 260 µm.

Such a depth may be sufficient to protect the underlying ceramic core 14 from undesired oxidation during the intended use of the coated component 10.

FIG. 4 shows an alternative embodiment where the Si-treated layer 16 is an applied layer on the ceramic core 14 to collectively form the ceramic substrate 12. Such an applied Si-treated layer 16 may be formed by first forming (e.g., via any suitable deposition technique) an applied layer 22 of silicon carbide on the surface 15 of the ceramic core 14, and then exposing the applied layer 22 silicon vapor 20, such as shown in FIG. 4. The applied layer 22 may include silicon carbide at an initial stoichiometric ratio (i.e., prior to Si vapor treatment) that is the same or different than that of the underlying ceramic core 14. The applied layer 22 may have a thickness sufficient to protect the underlying ceramic core 14 from undesired oxidation, such as about 1 µm to about 250 µm (e.g., about 1 µm to about 100 µm).

Similar to the embodiment above, the applied layer 22 may be exposed to silicon vapor 20 at a temperature sufficient for forming the Si-treated layer 16 (as shown in FIG. 4) with an increased amount of Si compared to the applied layer 22, which may be performed in an oven or suitable other chamber. Depending on the exposure conditions (e.g., time, temperature, pressure, and duration), the temperature and/or other conditions of the silicon vapor may be varied to control the Si to C ratio in the resulting Si-treated layer 16, as well as the depth of penetration of the enriched Si portion. Generally, the silicon vapor needs to have a temperature high enough such that it is a vapor at the exposure conditions. For instance, the silicon vapor may have a temperature of about 1400 °C to about 1800 °C, preferably about 1500 °C to about 1750 °C (e.g., about 1600 °C to about 1700 °C).

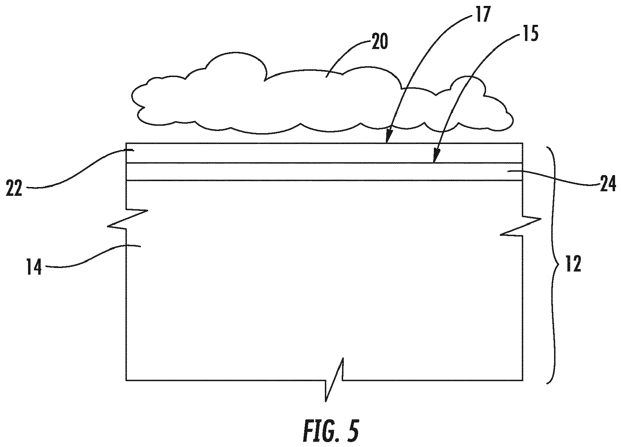

Referring to FIGS. 4 and 5, an optional barrier layer 24 is shown between the ceramic core 14 and the Si-treated layer 16 (formed from the applied layer 22). Such a barrier layer may be included to further extend the life of Si-treated SiC region, should any silicon diffuse thru the Si-treated layer to the substrate. For example, the barrier layer may be formed from rare earth silicates (e.g., mono-silicates and di-silicates). The optional barrier layer 24 may be relatively thin such that the barrier layer 24, when present, does not substantially interfere with the adhesion of the overlying layers to the ceramic core 14. For example, the optional barrier layer 24 may have a thickness that is about 10 nm to about 2.5 µm.

No matter the configuration of the Si-treated layer 16 and the ceramic core 14, an EBC 18 is formed over the ceramic substrate 12 to form the coated component 10 with an increased operating temperature if compared to a similar component using a silicon bond coating. The EBC 18 may include any combination of one or more layers formed from materials selected from typical EBC or thermal barrier coating ("TBC") layer chemistries, including but not limited to rare earth silicates (e.g., mono-silicates and di-silicates), aluminosilicates (e.g., mullite, barium strontium aluminosilicate (BSAS), rare earth aluminosilicates, etc.), hafnia, zirconia, stabilized hafnia, stabilized zirconia, rare earth hafnates, rare earth zirconates, rare earth gallium oxide, etc. The EBC 18 may be formed from a plurality of individual layers 19 having different chemistries to be directed at different types of layers that work together to protect the underlying ceramic core 14.

The coated components 10 of FIGS. 1 and 4 are particularly suitable for use as a component found in high temperature environments, such as those present in gas turbine engines, for example, combustor components, turbine blades, shrouds, nozzles, heat shields, and vanes. In particular, the turbine component can be a CMC component positioned within a hot gas flow path of the gas turbine such that the environmental barrier coating 18 protects the underlying ceramic core 14 within the gas turbine when exposed to the hot gas flow path.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A coated component comprising:
   a ceramic substrate having a Si-treated layer surrounding a ceramic core, wherein the ceramic core comprises silicon carbide, wherein the Si-treated layer is pretreated to tailor its surface's properties for inhibiting or delaying the formation of carbon oxides to upon exposure of the Si-treated layer to oxygen; and
   an environmental barrier coating on the Si-treated layer of the ceramic substrate.
2. The coated component as in clause 1, wherein the Si-treated layer is pretreated such that the environmental barrier coating is coated directly thereon without a silicon bond coating therebetween.
3. The coated component as in any preceding clause, wherein the environmental barrier coating is directly on the Si-treated layer of the ceramic substrate.
4. The coated component as in any preceding clause, wherein the ceramic core comprises silicon carbide having a first ratio of silicon to carbon, and wherein the Si-treated layer comprises silicon carbide having a second ratio of silicon to carbon, with the second ratio having a greater amount of silicon relative to the first ratio.
5. The coated component as in any preceding clause, wherein the Si-treated layer is integral to the ceramic core and has a depth of about 750 µm or less from an outer surface of the Si-treated layer extending into the ceramic substrate toward the ceramic core.
6. The coated component as in any preceding clause, wherein the Si-treated layer has a depth of 25 µm to about 260 µm.
7. The coated component as in any preceding clause, wherein the Si-treated layer is an applied layer on the ceramic core.
8. The coated component as in any preceding clause, wherein the Si-treated layer has a thickness of about 1 µm to about 250 µm.
9. The coated component as in any preceding clause, further comprising:
   a barrier layer between the ceramic core and the Si-treated layer.
10. The coated component as in any preceding clause, wherein the barrier layer comprises a rare earth disilicate.
11. A coated component comprising:
   a ceramic substrate having a Si-treated layer surrounding a ceramic core, wherein the ceramic core comprises silicon carbide having a first ratio of silicon to carbon, and wherein the Si-treated layer comprises silicon carbide having a second ratio of silicon to carbon, with the second ratio having a greater amount of silicon relative to the first ratio; and
   an environmental barrier coating on the Si-treated layer of the ceramic substrate.
12. The coated component as in any preceding clause, wherein the environmental barrier coating is directly on the Si-treated layer of the ceramic substrate.
13. The coated component as in any preceding clause, wherein the Si-treated layer is integral to the ceramic core and has a depth of about 750 µm or less from an outer surface of the Si-treated layer extending into the ceramic substrate toward the ceramic core.
14. The coated component as in any preceding clause, wherein the Si-treated layer is an applied layer on the ceramic core, and wherein the Si-treated layer has a thickness of about 1 µm to about 250 µm.
15. The coated component as in any preceding clause, further comprising:
   a barrier layer between the ceramic core and the Si-treated layer.
16. The coated component as in any preceding clause, wherein the barrier layer thickness is about 10 nm to about 2.5 µm, and wherein the barrier layer comprises a rare earth disilicate.
17. A method of coating a ceramic component on its outer surface, wherein the ceramic component comprises silicon carbide, the method comprising:
   exposing the outer surface of the ceramic component to silicon vapor at a temperature of about 1400 °C to about 1800 °C to form a Si-treated layer.
18. The method as in any preceding clause, wherein the silicon vapor forms a Si-treated layer that is integral to the ceramic core and has a depth of about 750 µm or less from the outer surface extending into the ceramic component.
19. The method as in any preceding clause, wherein the ceramic component has an applied layer of silicon carbide that defines the outer surface such that the silicon vapor forms a Si-treated layer from the applied layer silicon carbide.
20. The method as in any preceding clause, wherein the silicon vapor has a temperature of about 1600 °C to about 1750 °C.

## Claims

1. A coated component comprising:
a ceramic substrate having a Si-treated layer surrounding a ceramic core, wherein the ceramic core comprises silicon carbide, wherein the Si-treated layer is pretreated to tailor its surface's properties for inhibiting or delaying the formation of carbon oxides to upon exposure of the Si-treated layer to oxygen; and
an environmental barrier coating on the Si-treated layer of the ceramic substrate.

2. The coated component as in claim 1, wherein the Si-treated layer is pretreated such that the environmental barrier coating is coated directly thereon without a silicon bond coating therebetween.

3. The coated component as in claim 1, wherein the environmental barrier coating is directly on the Si-treated layer of the ceramic substrate.

4. The coated component as in claim 1, wherein the ceramic core comprises silicon carbide having a first ratio of silicon to carbon, and wherein the Si-treated layer comprises silicon carbide having a second ratio of silicon to carbon, with the second ratio having a greater amount of silicon relative to the first ratio.

5. The coated component as in claim 1, wherein the Si-treated layer is integral to the ceramic core and has a depth of about 750 µm or less from an outer surface of the Si-treated layer extending into the ceramic substrate toward the ceramic core; optionally
wherein the Si-treated layer has a depth of 25 µm to about 260 µm.

6. The coated component as in claim 1, wherein the Si-treated layer is an applied layer on the ceramic core.

7. The coated component as in claim 6, wherein the Si-treated layer has a thickness of about 1 µm to about 250 µm.

8. The coated component as in claim 6, further comprising:
a barrier layer between the ceramic core and the Si-treated layer.

9. The coated component as in claim 6, wherein the barrier layer comprises a rare earth disilicate.

10. A coated component comprising:
a ceramic substrate having a Si-treated layer surrounding a ceramic core, wherein the ceramic core comprises silicon carbide having a first ratio of silicon to carbon, and wherein the Si-treated layer comprises silicon carbide having a second ratio of silicon to carbon, with the second ratio having a greater amount of silicon relative to the first ratio; and
an environmental barrier coating on the Si-treated layer of the ceramic substrate.

11. The coated component as in claim 10, wherein the environmental barrier coating is directly on the Si-treated layer of the ceramic substrate.

12. The coated component as in claim 10, wherein the Si-treated layer is integral to the ceramic core and has a depth of about 750 µm or less from an outer surface of the Si-treated layer extending into the ceramic substrate toward the ceramic core.

13. The coated component as in claim 10, wherein the Si-treated layer is an applied layer on the ceramic core, and wherein the Si-treated layer has a thickness of about 1 µm to about 250 µm; optionally
further comprising:
a barrier layer between the ceramic core and the Si-treated layer; optionally
wherein the barrier layer thickness is about 10 nm to about 2.5 µm, and wherein the barrier layer comprises a rare earth disilicate.

14. A method of coating a ceramic component on its outer surface, wherein the ceramic component comprises silicon carbide, the method comprising:
exposing the outer surface of the ceramic component to silicon vapor at a temperature of about 1400 °C to about 1800 °C to form a Si-treated layer.

15. The method as in claim 14, wherein the silicon vapor forms a Si-treated layer that is integral to the ceramic core and has a depth of about 750 µm or less from the outer surface extending into the ceramic component; and/or
wherein the ceramic component has an applied layer of silicon carbide that defines the outer surface such that the silicon vapor forms a Si-treated layer from the applied layer silicon carbide; and/or
wherein the silicon vapor has a temperature of about 1600 °C to about 1750 °C.
